# FASCICULE DE BREVET EUROPEEN

(11) **EP 3 094 523 B1**
(45) Date de publication et mention de la délivrance du brevet: **12.09.2018**
(21) Numéro de dépôt: 14814925.5
(22) Date de dépôt: 13.11.2014
(51) Int. Cl.: B60R 13/00, B62D 25/10, B60R 13/04, B60R 21/34

(54) **VÉHICULE DOTÉ D'UN ÉLÉMENT D'ABSORPTION DE CHOC**
MIT EINEM STOSSDÄMPFENDEN ELEMENT AUSGESTATTETES FAHRZEUG
VEHICLE WITH A SHOCK ABSORBING ELEMENT

(30) Priorité: 13.01.2014 FR 1450238
(43) Date de publication de la demande: 23.11.2016
(73) Titulaire: Renault S.A.S., 92100 Boulogne-Billancourt (FR)
(72) Inventeur: PELZMAN, Remi, F-78560 Le Port Marly (FR); OUDDANE, Abdelhak, F-78280 Guyancourt (FR); PALLY, Gilles, F-78770 Andelu (FR)
(86) Numéro de dépôt international: PCT/FR2014/052886
(87) Numéro de publication internationale: WO 2015/104467

(56) Documents cités:
- EP-A1- 0 634 316
- WO-A1-2006/114298
- JP-A- S5 830 874
- US-A1- 2013 270 870

## Description

L'invention se rapporte à un véhicule doté d'un élément d'absorption de choc. La réglementation en matière de sécurité automobile étant de plus en plus sévère, les véhicules actuels doivent présenter un niveau élevé de sécurité, que ce soit vis-à-vis des occupants desdits véhicules ou pour les personnes extérieures à ceux-ci, comme par exemple les piétons. Dans ce cadre sécuritaire, les véhicules doivent notamment être conçus pour pouvoir absorber efficacement le choc de la tête d'un enfant, dans le cas d'une collision frontale accidentelle avec l'avant du véhicule. Le document US2013/0270870 montre un véhicule selon le préambule des revendications 1 et 9. Les véhicules selon l'invention sont dotés de moyens d'absorption d'un tel choc, dont l'emplacement a été réalisé de façon optimisée à l'avant du véhicule, et qui sont rapides et faciles à mettre en oeuvre le long d'une chaine de fabrication desdits véhicules.

L'invention a pour objet un véhicule comprenant un capot avant, apte à s'ouvrir et à se fermer au moyen d'une rotation autour d'un axe transversal placé à l'arrière dudit capot.

La principale caractéristique technique d'un véhicule selon l'invention, comme montrée dans la revendication 1, est que le capot est prolongé à l'avant par un élément d'absorption de choc, se retrouvant dans une position jointive avec au moins un élément fixe de la carrosserie du véhicule, notamment une grille d'entrée d'air et/ou un bouclier, lorsque ledit capot est dans une position fermée. De cette manière, ainsi positionné, cet élément d'absorption permet d'absorber un choc de la tête d'un enfant lors d'une collision accidentelle avec l'avant du véhicule. Généralement, les moyens d'absorption d'un tel choc sont placés à l'avant du véhicule dans l'espace compris entre une grille de calandre et l'extrémité avant du capot. Or, pour certains types de véhicules surélevés, comme par exemple les véhicules utilitaires, les contraintes du choc tête sont concentrés sur l'avant du capot. Par conséquent, sur de tels véhicules, le capot a été raccourci à l'avant, pour permettre l'implantation d'un élément d'absorption de choc sur ledit capot. L'expression « sensiblement verticale » signifie « inclinée au maximum de plus ou moins 10° par rapport à la verticale ». Préférentiellement, la l'élément d'absorption est léger et possède des aptitudes à la déformation élastique pour accompagner un choc de tête enfant. De façon avantageuse, l'élément d'absorption présente une certaine rigidité, car vu son emplacement sur le capot, il va également servir d'organe de préhension dudit capot, pour l'ouvrir ou le fermer. Cet élément d'absorption doit être monté sur le capot avec précision, afin de présenter une certaine continuité visuelle avec celui-ci, et ainsi optimiser le rendu esthétique de la partie avant du véhicule.

Avantageusement, l'élément d'absorption s'étend transversalement au véhicule et est monté sur ledit capot avec des moyens d'attache rapides. Il est supposé que les moyens d'attache rapides ne nécessitent ni l'utililisation d'un outillage particulier ni une manipulation compliquée. De tels moyens peuvent par exemple permettre de réaliser un montage par encliquetage. Selon l'invention, l'élément d'absorption possède une zone d'ancrage destinée à supporter une pièce d'ornement comportant un motif caractéristique de la marque du véhicule. De cette manière, l'élément d'absorption situé à l'avant du capot, possède deux fonctions distinctes :
- une fonction de support d'un motif distinctif faisant référence à la marque du véhicule,
- une fonction sécuritaire permettant de minimiser les effets d'un impact de la tête d'un enfant venant percuter accidentellement l'avant du véhicule.

Il n'est donc pas nécessaire de surdimensionner la face avant d'un véhicule pour y incorporer deux pièces distinctes, l'une dédiée à l'absorption de choc et l'autre au support d'un motif ornemental.

Préférentiellement, l'élément d'absorption comprend une structure et une peau solidarisées entre elles, ladite structure comportant des moyens de fixation de l'élément au capot et la peau étant dotée de moyens de montage pour la fixation de la pièce d'ornement. Il est supposé que la peau est solidarisée à la structure au moyen de techniques usuelles telles que par exemple un vissage, un soudage ou un encliquetage. Une fois montée, l'élément d'absorption présente ainsi deux faces opposées, l'une appartenant à la structure et destinée à la fixation dudit élément au capot, et l'autre appartenant à la peau et permettant la fixation de la pièce d'ornement.

De façon avantageuse, les moyens de fixation de la structure comprennent au moins un pion possédant une tête élargie, le capot possédant au moins une ouverture présentant une partie inférieure et une partie supérieure évasée et chaque pion étant destiné à venir se placer au niveau de l'extrémité inférieure de ladite partie inférieure par une translation verticale de l'élément d'absorption, après une pénétration de chaque tête élargie dans chacune desdites parties supérieures évasées. Un tel montage et simple et rapide à mettre en oeuvre, car il ne nécessite qu'une première translation horizontale de l'élément d'absorption afin de faire pénétrer chaque tête élargi dans la partie supérieure évasée d'une ouverture, puis une deuxième translation verticale vers le bas dudit élément jusqu'à ce que chacune desdites têtes élargie parvienne à l'extrémité inférieure de chacune des parties inférieures desdites ouvertures. Il est supposé que le capot est dans une position fermée sur le véhicule.

Avantageusement, l'élément d'absorption est fixé au capot par encliquetage. De cette manière, que l'élément d'absorption soit monobloc ou réalisé en deux pièces, une structure et une peau, il se fixe aisément et sans effort particulier au capot du véhicule.

De façon avantageuse, l'élément d'absorption est en matière plastique. Il est ainsi supposé que si l'élément d'absorption est constitué d'une structure et d'une peau, ladite structure et ladite peau sont chacun en plastique.

Préférentiellement, l'élément d'absorption comprend une surface extérieure qui se présente de façon sensiblement verticale lorsque le capot est dans la position fermée.

L'invention a pour deuxième objet un procédé de montage d'un élément d'absorption (5) de choc à la partie avant (9) d'un capot (3) de véhicule (1), d'après la revendication 9, ledit élément (5) possédant une structure (10) dotée d'au moins un pion (19) possédant une tête élargie (21), et une peau (11), le capot (3,9) comportant au moins une ouverture possédant une partie inférieure et une partie supérieure évasée.

La principale caractéristique d'un procédé selon l'invention, est qu'il comprend les étapes suivantes,
- une étape de solidarisation de la peau à la structure,
- une étape d'insertion de l'élément d'absorption dans le capot en position fermée, au moyen d'une translation horizontale dudit élément d'absorption selon un axe longitudinal du véhicule, ladite étape correspondant à une introduction de chaque tête élargie dans la partie supérieure évasée de chaque ouverture,
- une étape de translation verticale vers le bas dudit élément d'absorption jusqu'à ce que chaque tête élargie parvienne à l'extrémité inférieure de la partie inférieure de chaque ouverture,
- une étape d'encliquetage final dudit élément d'absorption dans ledit capot,
   - une étape de fixation par encliquetage d'une pièce d'ornement dans la peau de l'élément d'absorption.

Un véhicule selon l'invention présente l'avantage d'être monté facilement et rapidement le long d'une chaine de fabrication, car l'élément d'absorption peut être monté sur le capot en position fermée, ne nécessitant aucun effort particulier de la part d'un opérateur. Il a de plus l'avantage d'être peu encombrant, dans la mesure où la fonction d'absorption d'un choc de piéton et la fonction support d'un logo représentatif de la marque du véhicule, sont réalisée avec une pièce commune.

On donne ci-après, une description détaillée d'un mode de réalisation préféré d'un véhicule selon l'invention ainsi que d'un procédé de montage d'un élément d'absorption selon l'invention, en se référant aux figures 1 à 7.
- La figure 1 est une vue en perspective de la partie avant d'un véhicule selon l'invention,
- La figure 2A est une vue de face d'une peau d'un élément d'absorption de choc d'un véhicule selon l'invention,
- La figure 2B est une vue de face d'une structure d'un élément d'absorption de choc d'un véhicule selon l'invention,
- La figure 2C est une vue de derrière d'un élément d'absorption monté, comprenant la peau illustrée à la figure 2A et la structure illustrée à la figure 2C,
- La figure 3 est une vue en perspective partielle d'une face de la structure d'un élément d'absorption, ladite face comprenant des moyens de fixation au capot du véhicule,
- Les figures 4A, 4B, et 4C sont des vues en perspective partielle d'un capot de véhicule et d'un élément d'absorption, illustrant respectivement une première, une deuxième et une troisième étapes de montage dudit élément d'absorption sur ledit capot,
- La figure 5 est une vue de face d'un élément d'absorption monté sur un capot de véhicule, résultant des trois étapes illustrées aux figures 4A, 4B, et 4C,
- La figure 6 est une vue de face de l'élément d'absorption de la figure 5, illustrant une quatrième étape de montage dudit élément sur ledit capot,
- La figure 7 est une vue du dessous d'un élément d'absorption monté sur le capot et illustrant une cinquième étape de montage dudit élément sur ledit capot.

Afin de bien comprendre l'invention, la description détaillée s'effectue par rapport à un référentiel lié au véhicule et dans lequel l'axe X est un axe longitudinal avant-arrière du véhicule, orienté vers l'arrière, l'axe Y est un axe transversal du véhicule, orienté vers la droite et l'axe Z est un axe vertical orienté vers le haut.

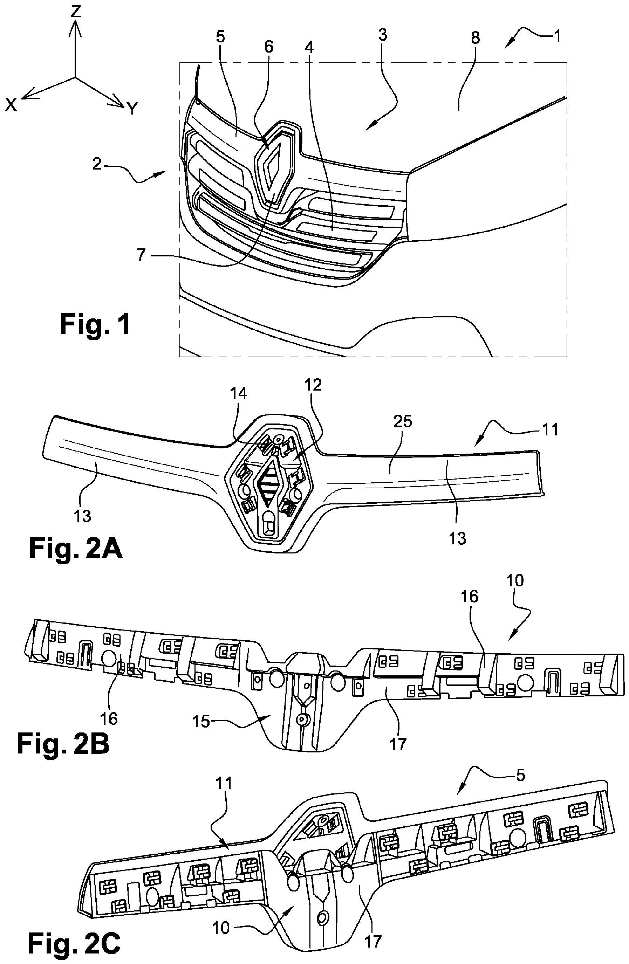

En se référant à la figure 1, une partie avant 2 d'un véhicule 1 selon l'invention, comprend un capot 3, une grille 4 de calandre, et un élément d'absorption 5 de choc destinée à supporter une pièce ornementale 6 sur laquelle figure un emblème 7, qui est représentatif de la marque dudit véhicule 1. De façon conventionnelle, le capot 3 est mobile en rotation autour d'un axe transversal Y et sensiblement horizontal du véhicule, ledit axe étant placé au niveau de la partie arrière dudit capot 3. Le capot 3 peut ainsi se déplacer entre une position de fermeture sensiblement horizontale, vers une position d'ouverture maximale pour laquelle il est incliné d'un angle inférieur à 45° par rapport à une position verticale. Schématiquement, le capot 3 comprend une partie principale 8 étendue, apte à recouvrir un logement du véhicule 1 dans lequel est généralement placé un moteur, et un bord avant 9 recourbé sur laquelle vient se fixer l'élément d'absorption 5 de choc. Ce bord avant 9 est assimilable à une bande sensiblement plane, s'étendant selon un axe transversal Y du véhicule 1. Ainsi, lorsque le capot 3 est dans une position de fermeture sur le véhicule 1, la partie principale 8 s'étend dans un plan sensiblement horizontal, tandis que le bord avant 9 se retrouve inscrit dans un plan sensiblement transversal et vertical. Le bord avant 9 comprend une série d'ouvertures ayant chacune une partie supérieure s'étendant horizontalement et une partie inférieure s'étendant verticalement. Les notions de « supérieur » et « inférieur » sont à considérer lorsque le capot 3 est fermé, le bord recourbé 9 s'étendant alors dans un plan sensiblement vertical.

En se référant à la figure 2C, l'élément d'absorption 5 est composé d'une structure 10 en plastique et d'une peau 11 en plastique, ladite structure 10 et ladite peau 11 étant solidarisées l'une à l'autre au moyen d'un soudage par ultra-sons.

En se référant à la figure 2A, la peau 11 est une pièce monobloc de faible épaisseur, comprenant une zone d'ancrage 12 centrale et deux bras 13 latéraux, placés de part et d'autre de ladite zone 12. Les deux bras 13 sont allongés et sont disposés l'un par rapport à l'autre de façon à ce que leurs axes longitudinaux soient parallèles et en continuité. La zone d'ancrage 12 possède une série d'ouvertures 14 prévues pour la fixation par encliquetage de la pièce ornementale 6. La peau 11 présente ainsi une face 25 sur laquelle va être implantée ladite pièce ornementale 6, et une face destinée à venir au contact de la structure 10.

En se référant à la figure 2B, la structure 10 de l'élément d'absorption 5 est une pièce monobloc de faible épaisseur, comportant une zone centrale 15 prolongée de chaque coté par un bras latéral 16. Les deux bras 16 sont allongés et sont disposés l'un par rapport à l'autre de façon à ce que leurs axes longitudinaux soient parallèles et en continuité. Les bras 13 de la peau 11 ont sensiblement la même longueur que celle des bras 16 de la structure 10. La structure 10 présente une face 17 dotée de moyens 18 de fixation et une face destinée à venir au contact de la peau 11.

En se référant à la figure 2C, une fois que l'élément d'absorption 5 a été monté par soudage de la peau 11 à la structure 10, il présente une première face 14 correspondant à la face de la peau 11 apte à recevoir la pièce ornementale 6, et une deuxième face 17 correspondant à la face de la structure 10 dotée des moyens de fixation. Lesdits moyens de fixation sont prévus pour assurer le montage de l'élément d'absorption 5 sur le bord 9 recourbé du capot 3.

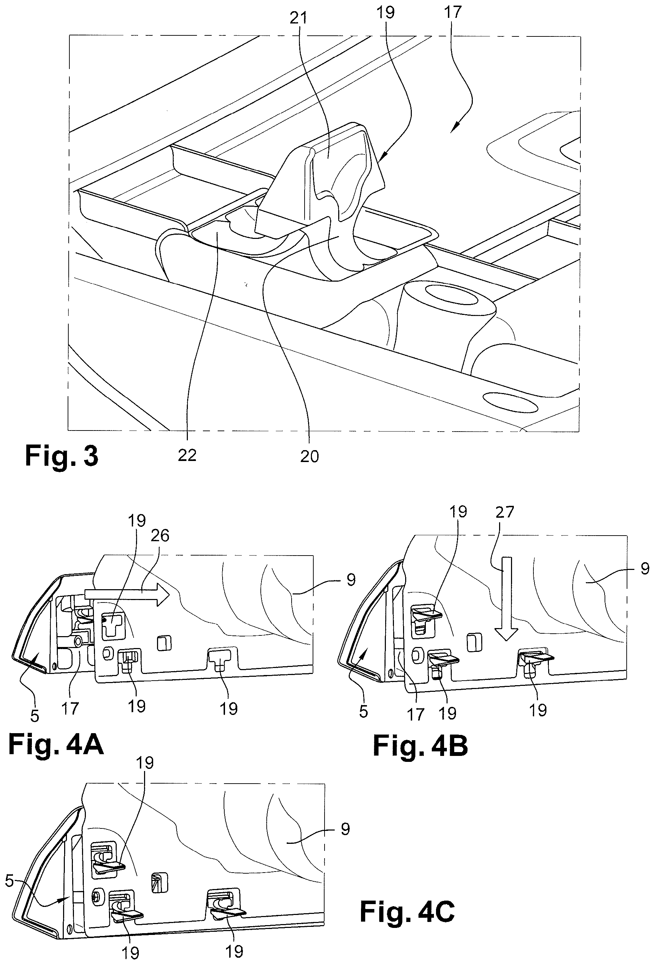

En se référant à la figure 3, les moyens de fixation de la structure 10 comprennent des pions 19 possédant chacun un corps étroit 20 prolongé par une tête élargie 21. Chaque pion 19 est implanté dans un évidement 22 en forme d'avaloir de la face 17 de la structure 10. Plus précisément, une extrémité du corps étroit 20 de chaque pion 19 est en contact avec ledit évidement 22, et l'autre extrémité dudit corps 20 se termine par la tête élargie 21, qui se retrouve ainsi en saillie de la paroi 17 de la structure 10. La tête élargie 21 d'un pion 19 est configurée de telle manière qu'elle crée avec le corps étroit 20 dudit pion 19 un épaulement plan, ladite tête 21 ayant une section transversale qui diminue progressivement le long d'un axe perpendiculaire audit épaulement.

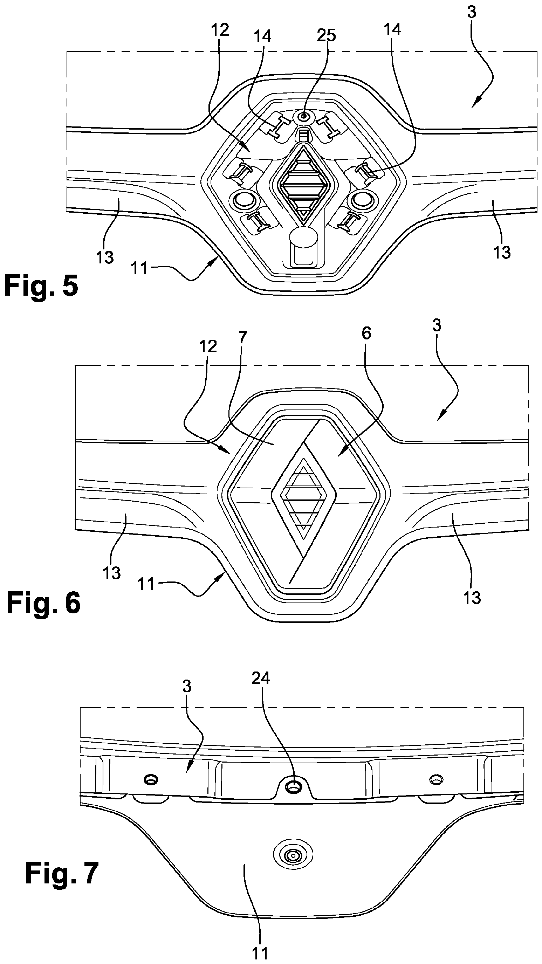

En supposant que la structure 10 et la peau 11 de l'élément 5 ont déjà été solidarisées l'une à l'autre, un procédé de montage dudit élément 5 sur le bord 9 avant recourbé du capot 3, suit les étapes suivantes :
- une étape de fermeture du capot 3 sur le véhicule 1, de manière à amener le bord avant recourbé 9 dudit capot dans une position sensiblement verticale,
- une étape d'insertion de l'élément d'absorption 5 dans le bord 9 avant du capot 3, au moyen d'une translation horizontale dudit élément 5 selon un axe longitudinal X du véhicule, ladite étape correspondant à une introduction de la tête élargie 21 de chaque pion 19 dans la partie supérieure horizontale de chaque ouverture dudit bord 9. Cette étape est illustrée à la figure 4A, la flèche 26 indiquant le sens de la translation horizontale de l'élément d'absorption 5. L'introduction de la tête élargie 21 est facilitée par la forme particulière de ladite tête 21de chaque pion 19, la partie la plus étroite de ladite tête pénétrant en premier dans la partie horizontale de chaque ouverture. Cette translation horizontale se poursuit jusqu'à ce que l'épaulement de chaque pion 19 ait complètement traversé le bord 9 avant du capot 3,
- une étape de coulissement vertical vers le bas de l'élément 5 d'absorption contre le bord 9, jusqu'à ce que chaque pion 19 vienne en butée contre l'extrémité inférieure de la partie inférieure de chaque ouverture du bord 9. Cette étape est illustrée aux figures 4B et 4C, la flèche apparaissant à la figure 4B indiquant le sens de la translation verticale de l'élément d'absorption 5. Les dimensions de l'épaulement de chaque pion 19 sont supérieures à celles de la partie inférieure de chaque ouverture du bord 9, si bien que l'élément d'absorption 5 demeure accrochée audit bord 9, sans possibilité d'être retiré par un simple éloignement avec ledit bord 9. La tête élargie 21 de chaque pion 19 permet ainsi de retenir l'élément d'absorption 5 contre le bord recourbé 9 du capot 3. Chaque évidement 22 en forme d'avaloir et dans lequel est implanté un pion 19, vient épouser étroitement une forme complémentaire du bord avant 9 du capot pour asseoir la fixation de l'élément d'absorption 5 audit bord,
- une étape d'encliquetage final de l'élément d'absorption 5 dans le bord 9 avant du capot 3, lorsque les pions 19 arrivent en butée au fond des ouvertures dudit bord 9,
- une étape de fixation par vissage de l'élément d'absorption 5 sur le bord 9 avant du capot 3, au moyen d'une seule vis 23 traversant la zone centrale de l'élément d'absorption 5, comme l'illustre la figure 5,
- une étape d'encliquetage de la pièce ornementale 6 dans la zone d'ancrage 12 centrale de la peau 11 comme l'illustre la figure 6,
- une étape d'ouverture du capot 3,
- une étape de fixation par vissage de l'élément d'absorption 5 sur le bord avant 9 du capot 3, au moyen d'une seule vis 24 traversant la zone centrale de l'élément5 d'absorption, comme l'illustre la figure 7.

## Revendications

1. Véhicule (1) comprenant un capot (3) avant, apte à s'ouvrir et à se fermer au moyen d'une rotation autour d'un axe transversal placé à l'arrière dudit capot (3), le capot (3) étant prolongé à l'avant par un élément (5) d'absorption de choc, se retrouvant dans une position jointive avec au moins un élément fixe de la carrosserie du véhicule, notamment une grille d'entrée d'air et/ou un bouclier, lorsque ledit capot (3) est dans une position fermée, **caractérisé en ce que** l'élément d'absorption (5) possède une zone d'ancrage (12) destinée à supporter une pièce d'ornement (6) comportant un motif (7) qui est caractéristique de la marque du véhicule (1).

2. Véhicule selon la revendication 1, **caractérisé en ce que** l'élément (5) d'absorption s'étend transversalement au véhicule (1) et est monté sur ledit capot (3) avec des moyens d'attache (19,22) rapides.

3. Véhicule selon la revendication 1, **caractérisé en ce que** l'élément d'absorption (5) comprend une structure (10) et une peau (11) solidarisées entre elles, et **en ce que** ladite structure (10) comporte des moyens de fixation (19,22) de l'élément d'absorption (5) au capot (3,9), la peau (11) étant dotée de moyens (14) de montage pour la fixation de la pièce d'ornement (6).

4. Véhicule selon la revendication 3, **caractérisé en ce que** les moyens de fixation de la structure comprennent au moins un pion (19) possédant une tête élargie (21), et **en ce que** le capot (3,9) possède au moins une ouverture présentant une partie inférieure et une partie supérieure évasée, chaque pion (19) étant destiné à venir se placer au niveau de l'extrémité inférieure de ladite partie inférieure par une translation verticale de l'élément d'absorption (5), après une pénétration de chaque tête (21) élargie dans chacune desdites parties supérieures évasées.

5. Véhicule selon l'une quelconque des revendications 1 à 4, **caractérisé en ce que** l'élément d'absorption (5) est fixée au capot (3,9) par encliquetage.

6. Véhicule selon l'une quelconque des revendications 1 à 5, **caractérisé en ce que** la pièce d'ornement (6) est fixée à la peau (11) de l'élément d'absorption (5) par encliquetage.

7. Véhicule selon l'une quelconque des revendications 1 à 6, **caractérisé en ce que** l'élément d'absorption (5) est en matière plastique.

8. Véhicule selon l'une quelconque des revendications 1 à 7, **caractérisé en ce que** l'élément d'absorption (5) comprend une surface extérieure qui se présente de façon sensiblement verticale lorsque le capot est dans la position fermée.

9. Procédé de montage d'un élément d'absorption (5) de choc à la partie avant (9) d'un capot (3) de véhicule (1), ledit élément (5) possédant une structure (10) dotée d'au moins un pion (19) possédant une tête élargie (21), et une peau (11), le capot (3,9) comportant au moins une ouverture possédant une partie inférieure et une partie supérieure évasée, ledit procédé étant **caractérisé en ce qu'**il comprend les étapes suivantes,
- une étape de solidarisation de la peau (11) à la structure (10),
- une étape d'insertion de l'élément d'absorption (5) dans le capot (3,9) en position fermée, au moyen d'une translation horizontale dudit élément d'absorption élément(5) selon un axe longitudinal du véhicule (1), ladite étape correspondant à une introduction de chaque tête élargie (21) dans la partie supérieure évasée de chaque ouverture,
- une étape de translation verticale vers le bas dudit élément d'absorption (5) jusqu'à ce que chaque tête élargie (21) parvienne à l'extrémité inférieure de la partie inférieure de chaque ouverture,
- une étape d'encliquetage final dudit élément d'absorption (5) dans ledit capot (3,9),
- une étape de fixation par encliquetage d'une pièce d'ornement (6) dans la peau (11) de l'élément d'absorption (5).

## Patentansprüche

1. Fahrzeug (1) umfassend eine vordere Haube (3), die geeignet ist, sich mittels einer Drehung um eine Querachse, die hinten an der Haube (3) angeordnet ist, zu öffnen und zu schließen, wobei die Haube (3) durch ein stoßdämpfendes Element (5) vorne verlängert ist, das sich in einer mit mindestens einem festen Element der Karosserie des Fahrzeugs, insbesondere einem Lufteinlassgitter und/oder einem Stoßfänger, aneinander liegenden Position befindet, wenn sich die Haube (3) in einer geschlossenen Position befindet, **dadurch gekennzeichnet, dass** das dämpfende Element (5) einen Verankerungsbereich (12) aufweist, der dazu bestimmt ist, ein Zierteil (6) zu tragen, das ein Motiv (7) aufweist, das für die Marke des Fahrzeugs (1) kennzeichnend ist.

2. Fahrzeug nach Anspruch 1, **dadurch gekennzeichnet, dass** sich das dämpfende Element (5) quer zum Fahrzeug (1) erstreckt und mit Schnellbefestigungsmitteln (19, 22) auf der Haube (3) angebracht ist.

3. Fahrzeug nach Anspruch 1, **dadurch gekennzeichnet, dass** das dämpfende Element (5) eine Struktur (10) und eine Haut (11) umfasst, die miteinander fest verbunden sind, und dadurch, dass die Struktur (10) Mittel zur Befestigung (19, 22) des dämpfenden Elements (5) an der Haube (3, 9) aufweist, wobei die Haut (11) mit Montagemitteln (14) zur Befestigung des Zierteils (6) versehen ist.

4. Fahrzeug nach Anspruch 3, **dadurch gekennzeichnet, dass** die Mittel zur Befestigung der Struktur mindestens einen Stift (19) umfassen, der einen vergrößerten Kopf (21) aufweist, und dadurch, dass die Haube (3, 9) mindestens eine Öffnung aufweist, die einen unteren Bereich und einen aufgeweiteten oberen Bereich aufweist, wobei jeder Stift (19) dazu bestimmt ist, durch eine vertikale Verschiebung des dämpfenden Elements (5) nach einem Eindringen jedes vergrößerten Kopfes (21) in jeden der aufgeweiteten oberen Bereiche an dem unteren Ende des unteren Bereichs angeordnet zu werden.

5. Fahrzeug nach einem der Ansprüche 1 bis 4, **dadurch gekennzeichnet, dass** das dämpfende Element (5) durch Einrasten an der Haube (3, 9) befestigt ist.

6. Fahrzeug nach einem der Ansprüche 1 bis 5, **dadurch gekennzeichnet, dass** das Zierteil (6) durch Einrasten an der Haut (11) des dämpfenden Elements (5) befestigt ist.

7. Fahrzeug nach einem der Ansprüche 1 bis 6, **dadurch gekennzeichnet, dass** das dämpfende Element (5) aus Kunststoff ist.

8. Fahrzeug nach einem der Ansprüche 1 bis 7, **dadurch gekennzeichnet, dass** das dämpfende Element (5) eine Außenfläche umfasst, die im Wesentlichen vertikal ist, wenn sich die Haube in der geschlossenen Position befindet.

9. Verfahren zur Befestigung eines stoßdämpfenden Elements (5) an dem vorderen Bereich (9) einer Haube (3) eines Fahrzeugs (1), wobei das Element (5) eine Struktur (10), die mit mindestens einem Stift (19) versehen ist, der einen vergrößerten Kopf (21) aufweist, und eine Haut (11) aufweist, wobei die Haube (3, 9) mindestens eine Öffnung aufweist, die einen unteren Bereich und einen aufgeweiteten oberen Bereich aufweist, wobei das Verfahren **dadurch gekennzeichnet ist, dass** es die folgenden Schritte umfasst,
- einen Schritt des festen Verbindens der Haut (11) an der Struktur (10),
- einen Schritt des Einfügens des dämpfenden Elements (5) in die Haube (3, 9) in geschlossener Position mittels einer horizontalen Verschiebung des dämpfenden Elements Element (5) entlang einer Längsachse des Fahrzeugs (1), wobei der Schritt einer Einführung jedes vergrößerten Kopfes (21) in den aufgeweiteten oberen Bereich jeder Öffnung entspricht,
- einen Schritt der vertikalen Verschiebung zum unteren Teil des dämpfenden Elements (5) hin, bis jeder vergrößerte Kopf (21) das untere Ende des unteren Bereichs jeder Öffnung erreicht,
- einen Schritt des letzten Einrastens des dämpfenden Elements (5) in die Haube (3, 9),
- einen Schritt des Befestigens durch Einrasten eines Zierteils (6) in die Haut (11) des dämpfenden Elements (5).

## Claims

1. Vehicle (1) comprising a front bonnet (3) able to open and to close by means of a rotation about a transverse axis placed at the rear of the said bonnet (3), the bonnet (3) being extended at the front by a shock-absorbing element (5) situated in a position in which it is contiguous with at least one fixed element of the body of the vehicle, in particular an air inlet grille and/or a bumper, when the said bonnet (3) is in a closed position, **characterized in that** the absorbing element (5) has an anchoring region (12) intended to support a decorative component (6) comprising a motif (7) which is characteristic of the marque of the vehicle (1).

2. Vehicle according to Claim 1, **characterized in that** the absorbing element (5) extends transversely to the vehicle (1) and is mounted on the said bonnet (3) with quick attachment means (19, 22).

3. Vehicle according to Claim 1, **characterized in that** the absorbing element (5) comprises a structure (10) and a skin (11) which are secured to one another, and **in that** the said structure (10) comprises means (19, 22) for fastening the absorbing element (5) to the bonnet (3, 9), the skin (11) being equipped with mounting means (14) for the fastening of the decorative component (6).

4. Vehicle according to Claim 3, **characterized in that** the fastening means of the structure comprise at least one lug (19) having a widened head (21), and **in that** the bonnet (3, 9) has at least one opening having a lower part and a flared upper part, each lug (19) being intended to be placed at the lower end of the said lower part by a vertical translational movement of the absorbing element (5) after each widened head (21) has penetrated into each of the said flared upper parts.

5. Vehicle according to any one of Claims 1 to 4, **characterized in that** the absorbing element (5) is fastened to the bonnet (3, 9) by latching.

6. Vehicle according to any one of Claims 1 to 5, **characterized in that** the decorative component (6) is fastened to the skin (11) of the absorbing element (5) by latching.

7. Vehicle according to any one of Claims 1 to 6, **characterized in that** the absorbing element (5) is made of plastic.

8. Vehicle according to any one of Claims 1 to 7, **characterized in that** the absorbing element (5) comprises an outer surface which assumes a substantially vertical orientation when the bonnet is in the closed position.

9. Method of mounting a shock-absorbing element (5) on the front part (9) of a bonnet (3) of a vehicle (1), the said element (5) having a structure (10) equipped with at least one lug (19) having a widened head (21), and a skin (11), the bonnet (3, 9) comprising at least one opening having a lower part and a flared upper part, the said method being **characterized in that** it comprises the following steps,
- a step of securing the skin (11) to the structure (10),
- a step of inserting the absorbing element (5) into the bonnet (3, 9) in the closed position by means of a horizontal translational movement of the said absorbing element element (5) along a longitudinal axis of the vehicle (1), the said step corresponding to an introduction of each widened head (21) into the flared upper part of each opening,
- a step of downward vertical translational movement of the said absorbing element (5) until each widened head (21) reaches the lower end of the lower part of each opening,
- a step of final latching of the said absorbing element (5) into the said bonnet (3, 9),
- a fastening step by latching a decorative component (6) into the skin (11) of the absorbing element (5).
